(19) Europäisches Patentamt
European Patent Office
Office européen des brevets

(11) Veröffentlichungsnummer: **0 177 733**
**B1**

(12) # EUROPÄISCHE PATENTSCHRIFT

(45) Veröffentlichungstag der Patentschrift: **24.02.88**

(51) Int. Cl.[4]: **C 08 L 69/00,** C 08 L 67/02

(21) Anmeldenummer: **85110784.7**

(22) Anmeldetag: **28.08.85**

(54) **Thermoplastische Formassen.**

(30) Priorität: **04.09.84 DE 3432412**

(43) Veröffentlichungstag der Anmeldung: **16.04.86 Patentblatt 86/16**

(45) Bekanntmachung des Hinweises auf die Patenterteilung: **24.02.88 Patentblatt 88/8**

(84) Benannte Vertragsstaaten: **DE FR GB IT NL**

(56) Entgegenhaltungen:
**DE-A-3 002 985**
**US-A-3 864 428**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Witman, Mark W., Dr., 1856 Taper Drive, Pittsburgh Pennsylvania 15249 (US)**
Erfinder: **Stix, Wolfgang, Dr., Freudenbergstrasse 56b, D-6900 Neckarsteinach (DE)**
Erfinder: **Köhler, Karl- Heinz, Dr., Buschstrasse 165, D-4150 Krefeld (DE)**
Erfinder: **Morbitzer, Leo, Dr., Rungestrasse 50, D-5000 Köln 80 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Gegenstand der Erfindung sind thermoplastische Formmassen aus

A) 98-10 Gew.-Teilen aromatischer Polycarbonate mit einem mittleren Molekulargewicht $\bar{M}_w$ (durch Lichtstreuung) von 10 000 bis 200 000

B) 60-0 Gew.-Teile Polyalkylenterephthalat

C) 30-0 Gew.-Teile Pfropfpolymerisat eines oder mehrerer ethylenisch ungesättigter Monomerer auf einen Kautschuk

D) 90-2 Gew.-Teile eines Polyesters aus Terephthalsäure und einem Diol, das mindestens eine Diarylsulfongruppe im Molekül enthält sowie gegebenenfalls zusätzlich einen aliphatischen Diol.

Diole, die Diarylsulfongruppen enthalten entsprechen beispielsweise der Formel (I).

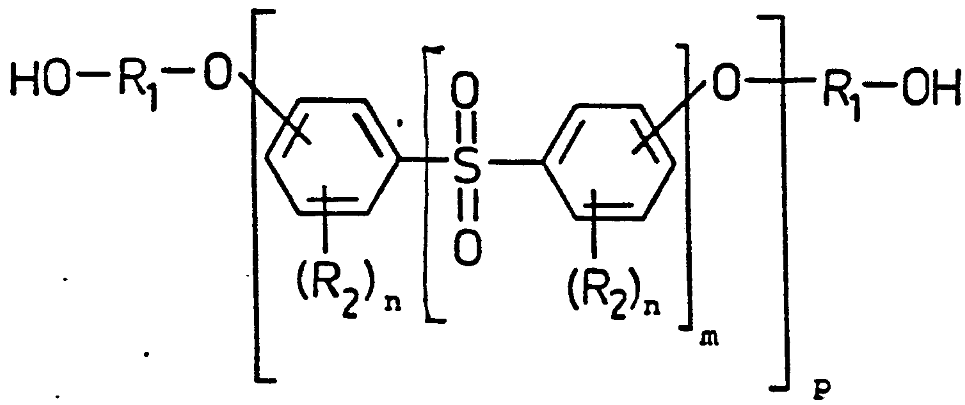

(I)

In Formel (I) bedeuten:

$R_1$: $-CH_2-CH_2-$ oder $-CH_2-\overset{CH_3}{CH}-$

oder ein Polyalkyletherrest $-(CH_2-CH_2-O-)_x$, $-(CH_2-CH_2-CH_2-O-)_x$ oder $-(CH_2-CH_2-CH_2-CH_2-0-)_x$ mit x = 2 bis 10,

$R_2$: Alkylrest mit 1 bis 4 C-Atomen oder ein Halogenatom

n: 0, 1, 2, 3 oder 4

m,p: eine ganze Zahl, mindestens 1.

Beispiele für Diole der Formel (I) sind:

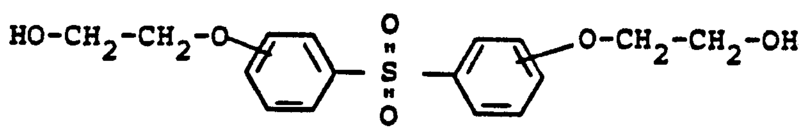

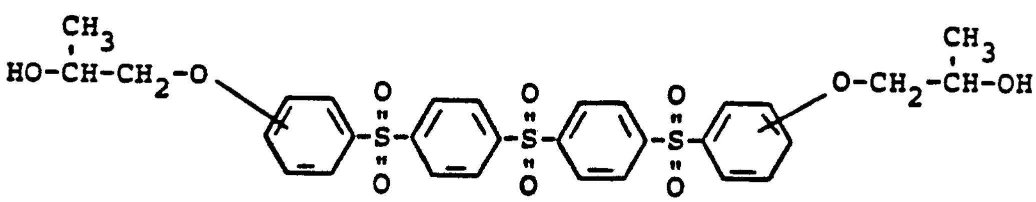

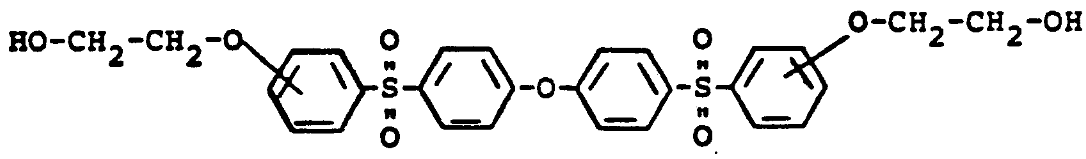

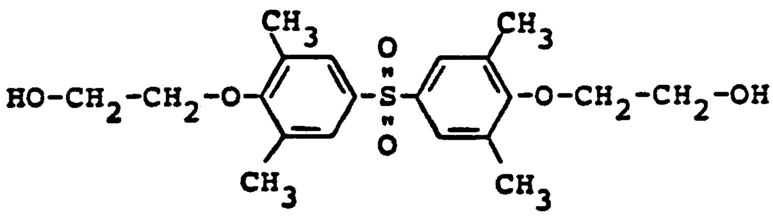

Weitere Beispiele für Diarylsulfongruppen-haltige Diole sind

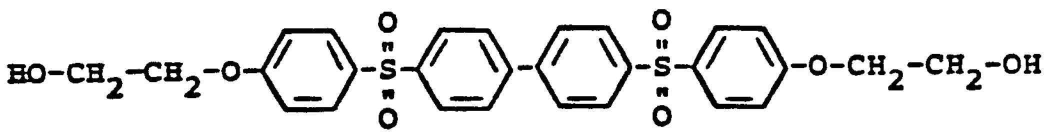

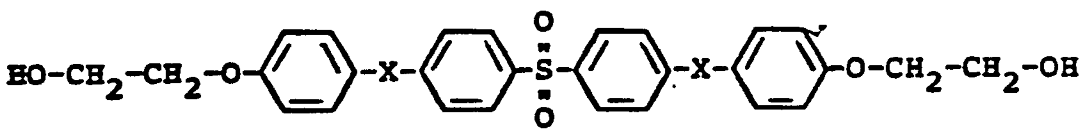

x = 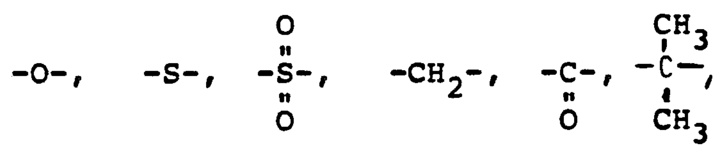

Einfachbindung

Polyethersulfone und Polysulfone mit aliphatischen Hydroxyl-Endgruppen.

Bevorzugte Diole sind solche der Formel

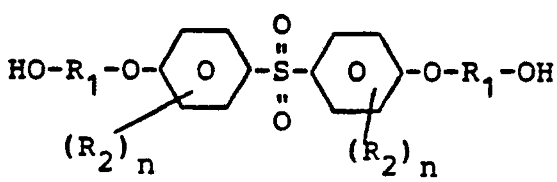

mit $R_1$ = $CH_2$-$CH_2$-, 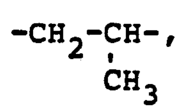

-$(CH_2$-$CH_2$-$O$-$)_x$, - $(CH_2$-$CH_2$-$CH_2$-$O$-$)_x$,-$(CH_2$-$CH_2$-$CH_2$-$CH_2$-$O$-$)_x$
mit x = 2 bis 10
und $R_2 = C_1$-$C_4$-Alkylrest oder Halogenatom
und n = 0, 1 oder 2.

Unter aromatischen Polycarbonaten (A) im Sinne dieser Erfindung werden die bekannten Homopolycarbonate, Copolycarbonate und Mischungen dieser Polycarbonate verstanden, denen z. B. mindestens eines der folgenden Diphenole zugrundeliegt:

Hydrochinon,
Resorcin,
Dihydroxydiphenyle,
Bis-(hydroxyphenyl)-$C_1$-$C_8$-alkane,
Bis-(hydroxyphenyl)-$C_4$-$C_5$-Cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone
und α, α'-Bis-(hydroxyphenyl)-diisopropylbenzole.

Diese und weitere geeignete Diphenole sind z. B. in den US-PS 3 028 365, 3 275 601, 3 148 172, 3 062 781, 2 991 273 und 2 999 846 beschrieben.

Bevorzugte Diphenole sind z. B.
4,4'-Dihydroxydiphenyl,
2,4-Bis-(4-hydroxyphenyl)-2-methylbutan,
α, α'-Bis-(4-hydroxyphenyl)-p-diisopropylbenzol,
Bis-(4-hydroxyphenyl)-ether,
Bis-(4-hydroxyphenyl)-sulfon und
Bis-(4-hydroxyphenyl)-keton.

Besonders bevorzugte Diphenole sind z. B.
2,2-Bis-(4-hydroxyphenyl)-propan,
Bis-(hydroxyphenyl)-methan und
1,1-Bis-(4-hydroxyphenyl)-cyclohexan.

Die aromatischen Polycarbonate (A) können durch den Einbau geringer Mengen, vorzugsweise von 0,05 bis 2,0 Mol-% (bezogen auf eingesetzte Diphenole), drei- oder mehr als dreifunktioneller Verbindungen, beispielsweise solcher mit drei oder mehr als drei phenolischen Hydroxylgruppen, verzweigt sein.

Die aromatischen Polycarbonate (A) sollen in der Regel mittlere Molekulargewichte $\bar{M}w$ von 10 000 bis 200 000, vorzugsweise von 20 000 bis 80 000 haben, ermittelt durch Lichtstreuung.

Den hochmolekularen Polycarbonaten mit $\bar{M}w$ von 10 000 bis 200 000 können auch kleine Anteile niedermolekularer Polycarbonate, z. B. mit einem mittleren Polykondensationsgrad von 2 bis 20, zugemischt sein.

Zur Einstellung des Molekulargewichtes $\bar{M}w$ der Polycarbonate (A) können in bekannter Weise Kettenabbrecher, wie beispielsweise Phenol, Halogenphenole oder Alkylphenole, in den berechneten Mengen eingesetzt werden.

Die erfindungsgemäß einzusetzenden Polycarbonate (A) können in bekannter Weise hergestellt werden, entweder nach dem Phasengrenzflächenverfahren oder nach dem Verfahren in homogener Lösung (Pyridinverfahren) oder gegebenenfalls nach dem Schmelzumesterungsverfahren.

Polyalkylenterephthalate (B) lassen sich aus Terephthalsäure (oder ihren reaktionsfähigen Derivaten, z. B. Dimethylterephthalat) und aliphatischen oder cycloaliphatischen Diolen mit 2 bis 10 C-Atomen nach bekannten Methoden herstellen (Kunststoff-Handbuch, Bd. VIII, S. 695 ff, Carl Hanser Verlag, München 1973).

Bevorzugte Polyalkylenterephthalate (B) enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-Reste.

Die bevorzugten Polyalkylenterephthalate (B) können neben Terephthalsäureresten bis zu 20 Mol-% Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z. B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate (B) können neben Ethandiol- bzw. Butandiol-1,4-Resten bis zu 20 Mol-% Reste anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentandiol-1,5, Hexandiol-1,6, Cyclohexandimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2-Bis-(4-hydroxycyclohexan)-propan, 2,4-Dihydroxy-1,1,3,3-tetramethylcyclobutan, 2,2-Bis-(3-β-hydroxy-ethoxyphenyl)-propan und 2,2-Bis-(4-hydroxypropoxy-phenyl)-propan (DE-OS 24 07 674, 24 07 776, 27 15 932).

Die Polyalkylenterephthalate (B) können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Pfropfpolymerisate (C) im Sinne der Erfindung sind solche, in denen auf einen Kautschuk entweder ein Monomer aus der Reihe Styrol, Methylmethacrylat oder eine Monomermischung von 95 bis 50 Gew.-% Styrol, α-Methylstyrol, kernsubstituiertes Styrol, Methylmethacrylat oder Mischungen daraus und 5 bis 50 Gew.-% (Meth)Acrylnitril, Maleinsäureanhydrid, N-substituierte Maleinimide oder Mischungen daraus

pfropfpolymerisiert sind. Geeignete Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines niederen (bevorzugt $C_1$-$C_6$) Alkylesters von Acryl- oder Methacrylsäure (z. B. Methylacrylat, Ethylacrylat, Methylmethacrylat und Ethylmethacrylat).

Weitere geeignete Kautschuke sind z. B. Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-% Monomere wie Vinylacetat, Acrylnitril, Styrol, Methylmethacrylat, Vinylether copolymerisiert enthalten. Diese Alkylacrylatkautschuke können weiterhin kleinere Mengen (bis zu 50 Gew.-%) vernetzend wirkender ethylenisch ungesättigter Monomere enthalten. Solche sind z. B. Alkylendioldi(meth)-acrylate, Polyesterdi-(meth)-acrylate, Di-, Tri-vinylbenzol, Triallylcyanurat, Allyl(meth)-acrylat, Butadien oder Isopren.

Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten. Andere geeignete Kautschuke sind z. B. EPDM-Kautschuke, also Kautschuke aus Ethylen, Propylen und einem unkonjugierten Dienmonomer.

Bevorzugt sind Dien- oder Alkylacrylatkautschuke.

Die Pfropfmischpolymerisate enthalten 10 bis 95 Gew.-%, insbesondere 20 bis 70 Gew.-%, Kautschuk und 90-5 Gew.-%, insbesondere 80 bis 30 Gew.-%, pfropfcopolymerisierte Monomere. Die Kautschuke liegen in diesen Pfropfmischpolymerisaten in Form wenigstens partiell vernetzter Teilchen einer mittleren Teilchengröße von 0,09 bis 5 μm, insbesondere von 0,1 bis 1 μm, vor. Derartige Pfropfmischpolymerisate werden durch radikalische Pfropfcopolymerisation von Monomeren aus der Reihe Styrol, α-Methylstyrol, kernsubstituiertes Styrol, (Meth)Acrylnitril, Methylmethacrylat, Maleinsäureanhydrid, N-substituiertes Maleinimid in Gegenwart der zu pfropfenden Kautschuke hergestellt und sind durchweg bekannt. Bevorzugte Herstellungsverfahren für solche Pfropfmischpolymerisate sind die Emulsions-, Lösungs-, Masse- oder Suspensionspolymerisation.

Die Polyester (D) sind zu 3 bis 40 Gew.-%, bezogen auf Polyester (D) aus Diarylsulfongruppen-haltigen Diolen aufgebaut. Sie können nach den gleichen Verfahren, wie sie bei der Komponente (B) genannt sind, hergestellt werden. Es muß lediglich das Diol oder ein Teil des Diols bzw. der Diole durch ein Diarylsulfongruppenhaltiges Diol ersetzt werden. Es können beispielsweise Diole der Formel (I) verwendet werden. Geeignete Diole sind Polyethersulfone und Polysulfone mit aliphatischen Hydroxyl-Endgruppen. Die Arylreste in den Diolen können auch mit Halogen- oder Alkylgruppen substituiert sein. Bevorzugt wird das 4,4'-Bis-(2-hydroxyethoxy)-diphenyl-sulfon eingesetzt.

Mischungen aus aromatischen Polycarbonaten und Polyestern sind bekannt (DE-AS 1 694 124 oder DE-OS 2 622 414).

Zur Verbesserung der Zähigkeit solcher Polycarbonat/Polyester-Mischungen können kautschukelastische Pfropfcopolymerisate mit einer Glasübergangstemperatur unter -20° C in die Massen eingebracht werden. Solche Mischungen sind ebenfalls bekannt (US-PS 38 64 428).

Insbesondere die kautschukmodifizierte Form von Polycarbonat/Polyester-Mischungen hat für die Herstellung von benzinbeständigen und zähen Teilen für den Außeneinsatz an Kraftfahrzeugen wirtschaftliche Bedeutung erlangt.

Trotz der vielfach positiven Eigenschaften dieser Formmassen werden sie doch manchen Anforderungen nicht gerecht. Ein schwerwiegender Nachteil dieser Formmassen ist ihre geringe Wärmeformbeständigkeit. So treten bei längeren Temperaturbelastungen, wie sie etwa bei der Lackierung der Teile selbst oder bei der Nachlackierung eines fertig montierten Gerätes (z. B. Automobil) auftreten können, Verzugserscheinungen auf, die nicht hingenommen werden können, und die die Verwendung dieser Formmassen für viele Anwendungen ausschließt.

Es besteht daher ein Bedarf an Formmassen mit einer Wärmeformbeständigkeit von mindestens 120° C und den bekannt guten physikalischen und chemischen Eigenschaften von Polycarbonat/Polyester-Mischungen.

Die erfindungsgemäßen Mischungen aus Polycarbonat, gegebenenfalls Kautschukmodifikator und einer Polyesterkomponente, die mindestens teilweise aus einem Diarylsulfongruppen-haltigen Diol aufgebaut ist, besitzen deutlich verbesserte Wärmeformbeständigkeit und eine ausgezeichnete Tieftemperaturzähigkeit.

Die Erhöhung der Wärmeformbeständigkeit in den Mischungen mit den erfindungsgemäß zu verwendenden Polyestern ist überraschend, weil sowohl der Schmelzpunkt der kristallinen Anteile als auch der Kristallisationsgrad dieser Polyester niedriger ist als bei üblichen Polyalkylenterephthalaten, so daß man eine niedrigere Wärmeformbeständigkeit erwarten würde. So zeigt beispielsweise ein Polybutylenterephthalat mit einer Intrinsic-Viskosität von 1,7 einen Schmelzpunkt von 223° C (Maximum des Schmelzpeaks in der DTA) und eine Schmelzwärme von 48 J/g. Ein Polybutylenterephthalat, in das 10 Gew.-% 4,4'-Bis-(2-hydroxyethoxy)-diphenylsulfon einkondensiert sind und das eine Intrinsic-Viskosität von 1,8 hatte, besaß dagegen einen Schmelzpunkt von 209° C und eine Schmelzwärme von 33 J/g.

Die mit dem erfindungsgemäß zu verwendenden PBTP hergestellten Formmassen verziehen sich auch bei Temperaturen bis 130° C nicht und haben eine ausgezeichnete Zähigkeit. Dadurch können die Formteile mit geeigneten Lacksystemen problemlos lackiert werden und als benzinbeständige, auch bei tiefen Temperaturen schlagzähe Außenteile an Kraftfahrzeugen verwendet werden.

Die Herstellung der erfindungsgemäßen Formmassen kann in den üblichen Mischaggregaten wie Walzen,

Knetern, Ein- und Mehrwellenextrudern erfolgen.

Die erfindungsgemäßen Formmassen können die für Polycarbonate und/oder Polyester üblichen Additive, wie Gleit- und Entformungsmittel, Nukleiermittel, Stabilisatoren, Füll- und Verstärkungsstoffe, Flammschutzmittel und/oder Farbstoffe enthalten.

Die gefüllten bzw. verstärkten Formmassen können bis zu 30 Gew.-%, bezogen auf die verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Polyesterformmassen enthalten Flammschutzmittel in einer Konzentration von im allgemeinen weniger als 30 Gew.-%, bezogen auf die flammgeschützten Formmassen.

Es kommen die für Polycarbonate bzw. Polyester bzw. kautschukelastische Polymerisate bekannten Flammschutzmittel in Frage, wie z. B. Polyhalogendiphenyl, Polyhalogendiphenylether, Polyhalogenphthalsäure und ihre Derivate und Polyhalogenoligo- und polycarbonate, wobei die entsprechenden Bromverbindungen besonders wirksam sind. Außerdem enthalten sie in der Regel einen Synergisten, wie z. B. Antimontrioxid.

Die erfindungsgemäßen Formmassen aus Polycarbonaten, modifizierten Polyalkylenterephthalaten und gegebenenfalls kautschukelastischen Polymerisaten und gegebenenfalls den genannten weiteren Zusätzen können zu Formkörpern wie Stoßstangen, Rammleisten oder Radkappen verarbeitet werden, finden also beispielsweise im Außenbereich von Automobilen Verwendung.

**Beispiele**

Verwendete Komponenten

I. Polycarbonat, hergestellt in bekannter Weise aus Bisphenol-A, Phenol und Phosgen, relative Viskosität 1,285, gemessen in Dichlormethan bei 25°C in 0,5 g/100 ml Lösung.

II. Polybutylenterephthalat, hergestellt in bekannter Weise aus Terephthalsäuredimethylester und Butandiol-1,4 mit einer Intrinsic-Viskosität von 1,18 dl/g, gemessen in Phenol/o-Dichlorbenzol (Gew.-Verhältnis 1 : 1) bei 25°C im Ubbelohde-Viskosimeter.

III. Pfropfpolymerisat, 80 Gew.-% Pfropfgrundlage aus vernetztem Polybutadien (Gelgehalt über 70 %, gemessen in Toluol) und 20 Gew.-% Pfropfauflage aus Polymethylmethacrylat, hergestellt in bekannter Weise.

IV. Copolybutylenterephthalat mit 10 Gew.-% 4,4'-Bis-hydroxyethoxydiphenylsulfon, hergestellt nach folgender Vorschrift:

In einem ölbeheizten 25-l-Stahlautoklaven mit Rührer, Vakuum-Destillationsaufsatz und Boden-Ablaßvorrichtung werden unter $N_2$-Inertgas-Atmosphäre bei RT folgende Komponenten vorgelegt:

4,66 kg (24 Mol) Dimethylterephthalat

0,529 kg (1,56 Mol) 4,4'-Bishydroxyethoxy-diphenyl-sulfon (10 Gew.-%, bezogen auf Co-PBT),

2,89 kg (32 Mol) Butandiol

2,73 kg Titantetraisopropylat

Das Reaktionsgemisch wird innerhalb von 2 h unter $N_2$-Atmosphäre auf 190°C erhitzt, dann weitere 2 h bei 190°C und 1 h bei 200°C bis zur fast quantitativen Methanol-Abspaltung gerührt. Nach beendeter Umesterung wird in der Oligokondensationsstufe innerhalb 1-2 h der Druck auf ca. 1 Torr vermindert und die Reaktionstemperatur von 200°C auf 260°C gesteigert, wobei Butandiol abdestilliert.

Unter weiterer Druckverminderung auf ca. 0,3 Torr wird das mittelviskose Vorkondensat innerhalb ca. 1 h bei 260°C unter Butandiolabspaltung polykondensiert.

Die Polyesterschmelze wird wie üblich in Wasser aufgesponnen und granuliert.

Die relative Lösungsviskosität $\eta$ rel des trockenen Granulates wird in einer Konzentration von 0,5 g/100 ml Lösungsmittelgemisch aus Phenol/o-Dichlorbenzol (Gew.-Verh. 1 : 1) im Ubbelohde-Viskosimeter bei 25°C bestimmt:

$\eta$ rel: 1,521

Das nachkondensierte Produkt wurde im Beispiel 2 verwendet.

V. Copolybutylenterephthalat mit 20 Gew.-% 4,4'-Bis-hydroxyethoxydiphenylsulfon, hergestellt entsprechend der Vorschrift von Komponente IV. Das nachkondensierte Produkt hatte eine Viskosität von 2,164. Es wurde in Beispiel 3 eingesetzt.

Herstellung der Formmassen

Die Komponenten werden in einem Zweiwellenextruder unter Stickstoffatmosphäre bei Temperaturen von 320°C aufgeschmolzen und homogenisiert. Der Schmelzestrang wird vor dem Austritt aus der Düse entgast, in Wasser abgekühlt, granuliert und getrocknet. Die Verarbeitung erfolgt bei 270°C Massetemperatur auf einer Spritzgießmaschine.

Die Tabelle I enthält die Ergebnisse der Versuche.

**Tabelle 1**

| Beispiel Nr. | Komponente (Gew.-%) I | II | III | IV | V | Vicat *1 °C | RT | Izod (J/m) *2) -30°C | -40°C |
|---|---|---|---|---|---|---|---|---|---|
| 1 | 54 | 36 | 10 | - | - | 120 | 819 | 656 | 326 |
| 2 | 54 | - | 10 | 36 | - | 130 | 856 | 734 | 657 |
| 3 | 54 | - | 10 | - | 36 | 132 | 875 | 777 | 727 |

*1 Vicat-Erweichungstemperatur VST Methode B, gemessen nach ISO 306 (DIN 53 460)
*2 gemessen nach ASTM D 256 an 3,2 mm starken Prüfkörpern

**Patentansprüche**

1. Thermoplastische Formmassen, aus
A) 98-10 Gew.-Teilen aromatischer Polycarbonate mit einem mittleren Molekulargewicht $\bar{M}_w$ (durch Lichtstreuung) von 10 000 bis 200 000
B) 60-0 Gew.-Teile Polyalkylenterephthalat
C) 30-0 Gew.-Teile Pfropfpolymerisat eines oder mehrerer ethylenisch ungesättigter Monomerer auf einen Kautschuk
D) 90-2 Gew.-Teile eines Polyesters aus Terephthalsäure und einem Diol, das mindestens eine Diarylsulfongruppe im Molekül enthält sowie gegebenenfalls zusätzlich einem aliphatischen Diol.
2. Thermoplastische Formmassen gemäß Anspruch 1, dadurch gekennzeichnet, daß der Polyester (D) aus einem Diol der Formel (I) aufgebaut ist,

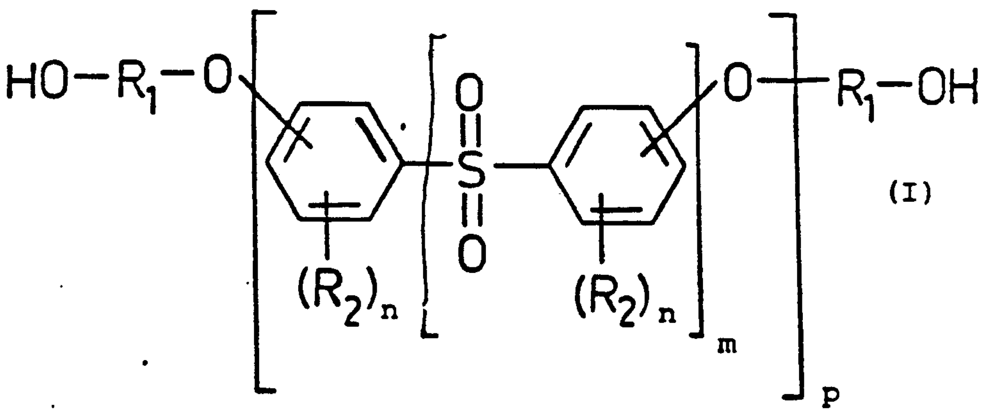

(I)

worin
$R_1$: $-CH_2-CH_2-$ oder $-CH_2-CH-$
$CH_3$

oder ein Polyalkyletherrest
$-(CH_2-CH_2-O-)_x$, $-(CH_2-CH_2-CH_2-O-)_x$ oder $-(CH_2-CH_2-CH_2-CH_2-O-)_x$
mit x=2 bis 10
$R_2$: Alkylrest mit 1-4 C-Atomen oder ein Halogenatom
n: eine ganze Zahl von 0 - 4
mp: eine ganze Zahl, mindestens 1
bedeuten.
3.Thermoplastische Formmassen gemäß Anspruch 1, dadurch gekennzeichnet, daß die Diarylsulfongruppenhaltigen Diole solche der Formel

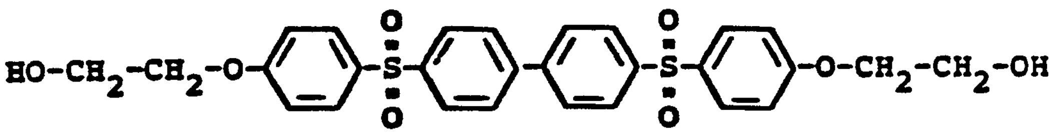

oder

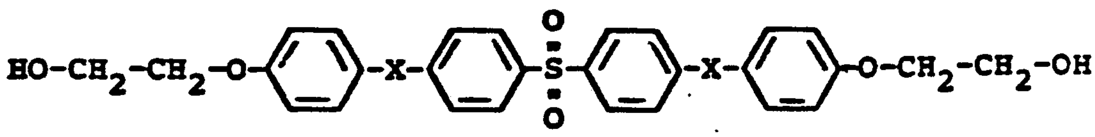

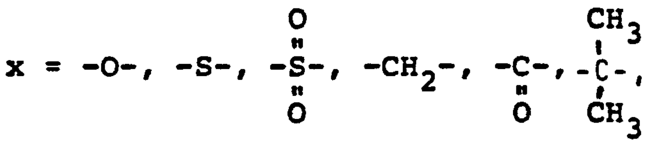

Einfachbindung

oder Polyethersulfon oder Polysulfone mit aliphatischen Hydroxyl-Endgruppen sind.

**Claims**

1. Thermoplastic moulding compositions obtained from

A) 98-10 parts by weight of aromatic polycarbonates having an average molecular weight $\bar{M}_w$ (by light scattering) of 10,000 to 200,000,

B) 60-0 parts by weight of polyalkylene terephthalate,

C) 30-0 parts by weight of a graft polymer of one or more ethylenically unsaturated monomers on a rubber,

D) 90-2 parts by weight of a polyester of terephthalic acid and a diol which contains at least one diaryl sulphone group in the molecule and optionally in addition an aliphatic diol.

2. Thermoplastic moulding compositions according to Claim 1, characterised in that the polyester (D) is based on a diol of the formula (I)

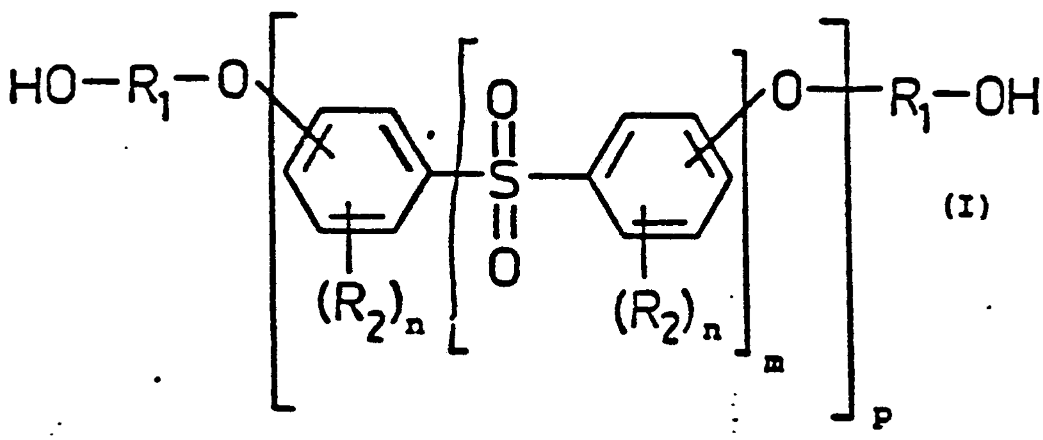

(I)

wherein

$R_1$ denotes $-CH_2-CH_2-$ or 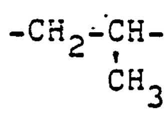

or a polyalkyl ether radical

$-(CH_2-CH_2-O-)_x$, $-(CH_2-CH_2-CH_2-O-)_x$ or $-(CH_2-CH_2-CH_2-CH_2-O-)_x$

in which $x = 2$ to 10,

$R_2$ denotes an alkyl radical with 1-4 C atoms or a halogen atom,

n denotes an integer from 0 - 4 and

m and p denote an integer, at least 1.

3. Thermoplastic moulding compositions according to Claim 1, characterised in that the diaryl-sulphone-group-containing diols are those of the formula

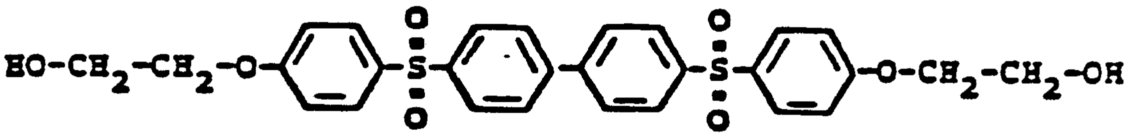

or

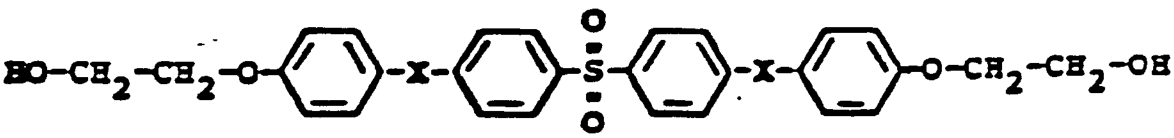

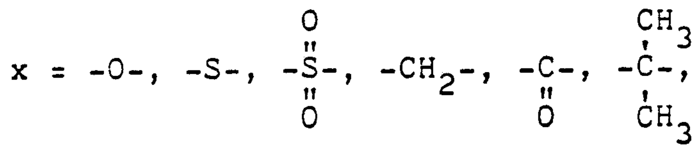

or a single bond or polyether sulphone or polysulphones having aliphatic hydroxyl end groups.

**Revendications**

1. Mélanges à mouler thermoplastiques, composés

A) de 98 à 10 parties en poids de polycarbonates aromatiques ayant un poids moléculaire moyen $\bar{M}_p$ (déterminé par diffusion de la lumière) de 10 000 à 200 000

B) de 60 à 0 partie en poids de polyalkylènetéréphtalate

C) de 30 à 0 partie en poids de polymère de greffage sur un caoutchouc d'un ou plusieurs monomères à non-saturation éthylénique

D) de 90 à 2 parties en poids d'un polyester d'acide téréphtalique et d'un diol qui contient au moins un groupe diarylsulfone dans sa molécule ainsi que, en outre, le cas échéant, un diol aliphatique.

2. Mélanges à mouler thermoplastiques suivant la revendication 1, caractérisés en ce que le polyester (D) est édifié à partir d'un diol de formule (I)

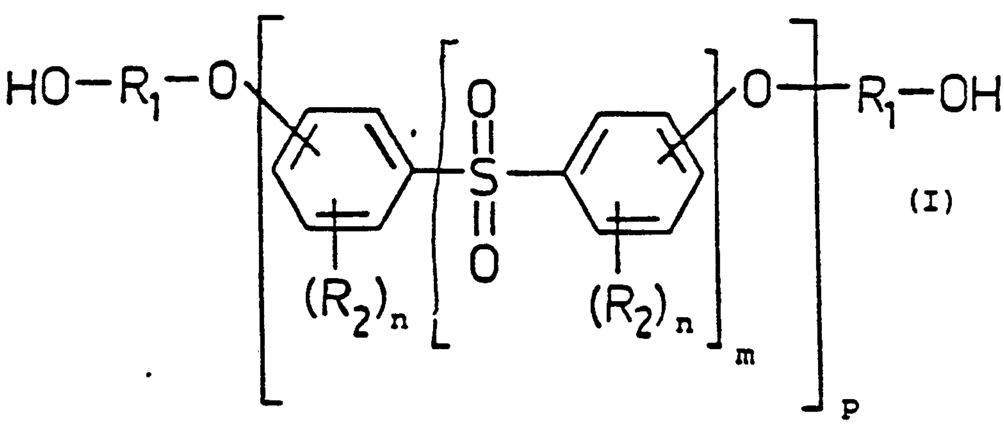

(I)

dans laquelle

$R_1$ est un groupe $-CH_2-CH_2-$ ou 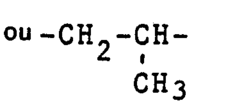

ou un reste polyalkyléther $-(CH_2-CH_2-O-)_x$, $-(CH_2-CH_2-CH_2-O-)_x$ ou $-(CH_2-CH_2-CH_2-CH_2-O-)_x$ avec $x = 2$ à 10

$R_2$ est un reste alkyle ayant 1 à 4 atomes de carbone ou un atome d'halogène,
n est un nombre entier de 0 à 4,
mp représentent un nombre entier au moins égal à 1.

3. Mélanges à mouler thermoplastiques suivant la revendication 1, caractérisés en ce que les diols contenant des groupes diarylsulfone répondent à la formule

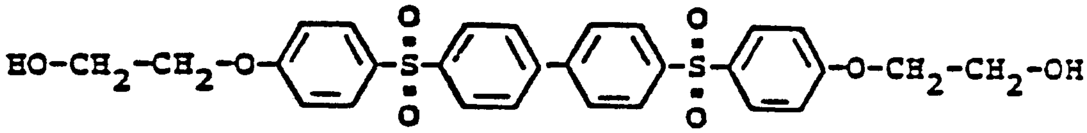

ou

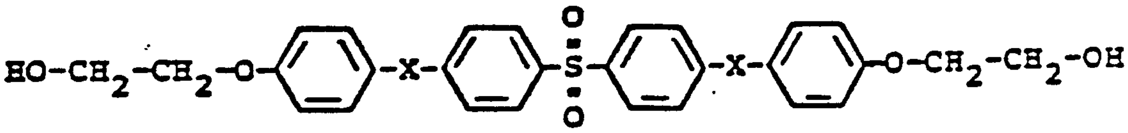

dans laquelle
x représente -O-, -S-, 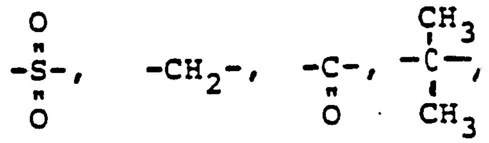

une liaison simple ou une polyéthersulfone ou des polysulfones avec des groupes hydroxyle aliphatiques terminaux.